## Europäisches Patentamt
## European Patent Office
## Office européen des brevets

(11) Veröffentlichungsnummer: **0 002 168**
**B1**

(12) **EUROPÄISCHE PATENTSCHRIFT**

(45) Veröffentlichungstag der Patentschrift: **20.01.82**

(21) Anmeldenummer: **78810020.4**

(22) Anmeldetag: **10.11.78**

(51) Int. Cl.³: **A 47 G 19/00,**
**A 47 G 21/00**

(54) **Hilfsgerät für Essgabel zum Aufwickeln von Spaghetti.**

(30) Priorität: **15.11.77 CH 14026/77**

(43) Veröffentlichungstag der Anmeldung:
**30.05.79 Patentblatt 79/11**

(45) Bekanntmachung des Hinweises auf die Patenterteilung:
**20.01.82 Patentblatt 82/3**

(84) Benannte Vertragsstaaten:
**DE FR GB**

(56) Entgegenhaltungen:
**FR - A - 2 161 396**
**US - A - 2 664 722**
**US - A - 2 795 121**
**US - A - 2 841 869**
**US - A - 3 589 009**
**US - A - 3 611 849**

(73) Patentinhaber: **Zapomel, Janos, Dr.**
**Oetlingerstrasse 5**
**CH-4057 Basel (CH)**

(72) Erfinder: **Zapomel, Janos, Dr.**
**Oetlingerstrasse 5**
**CH-4057 Basel (CH)**

(74) Vertreter: **Rottmann, Richard, Dipl.-Ing.**
**Postfach 344**
**CH-8034 Zuerich (CH)**

Courier Press, Leamington Spa, England.

## Hilfsgerät für Essgabel zum Aufwickeln von Spaghetti

Die vorliegende Erfindung bezieht sich auf ein Hilfsgerät für Essgabel zum Aufwickeln von Spaghetti.

Das Verspeisen von Spaghetti oder anderen langen Fadennudeln erfolgt in der Weise, indem die Spaghetti mittels der Essgabel auf diese aufgewickelt und so zum Mund geführt werden. Das Aufwickeln der Spaghetti braucht eine grosse Gewandtheit und Geschick und bereitet oft Schwierigkeiten, so dass Tischdecke und Kleidung beschmutzt werden.

Es sind bereits Hilfsgeräte zum Aufwickeln von Spaghetti bekanntgeworden, die als Gabeln mit drehbarem Zinkenteil oder als Gabeln die in einer Löffelmulde einsetzbar sind, ausgebildet sind. Alle diese Ausbildungen sind kompliziert im Aufbau und teuer in der Herstellung.

Ferner ist aus der US—PS 3 611 849 ein als "Spaghettimesser" ausgebildetes Essgerät bekanntgeworden, welches am Ende eines Handgriffes ein ovales, ringförmiges Schneidorgan besitzt. Die Gabel wird durch das etwas angehobene Schneidorgan gesteckt, die Spaghetti auf die Gabel aufgewickelt. worauf mit dem ovalen Messer die überhängenden Spaghettiteile abgeschnitten werden.

Dieses Gerät ist nicht geeignet, das Aufwickeln von ganzen Spaghetti zu erleichtern.

Zweck der Erfindung ist es, ein Hilfsgerät vorzuschlagen, welches als billiger Massenartikel hergestellt und eingesetzt werden kann. Das Hilfsgerät soll das Aufwickeln von Spaghetti mit der Essgabel wesentlich vereinfachen und erleichtern.

Das Hilfsgerät eingangs erwähnter Art zeichnet sich gemäss der Erfindung dadurch aus, dass dasselbe einen an den Tellerrand zu befestigenden Halter mit einer zylindrischen Vertiefung zur Aufnahme der Gabelspitze und eine die Vertiefung teilweise umschliessendes, sich vertikal nach oben erstreckendes Leitorgan aufweist, und an beiden Längsseiten des Halters je eine Seitenwand mit je einer Klammer besitzt. Zum Gebrauch wird die mit dem ungeordneten Spaghettiknäuel beladene Gabel vertikal in die Vertiefung des Gerätes gesteckt und um die eigene Achse gedreht, worauf der Spaghettiknäuel durch das als seitliche Leitwand ausgebildete Leitorgan geformt und so auf die Gabel gewickelt wird, dass ein mundgerechter Spaghettiwickel entsteht.

Auf beiliegender Zeichnung ist ein Ausführungsbeispiel des Erfindungsgegenstandes dargestellt und zwar zeigen:

Fig. 1 Das Gerät in Seitenansicht und
Fig. 2 eine Draufsicht.

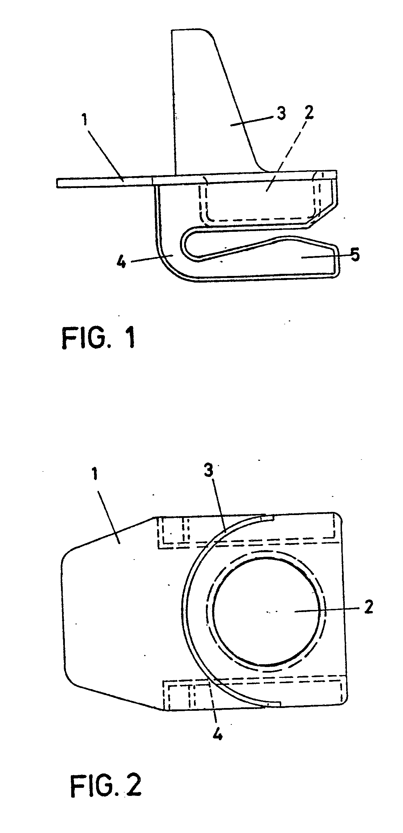

Gemäss der dargestellten Ausführung ist das Gerät mit einem plattenförmigen, z.B. viereckigen Halter 1 versehen, welcher mit einer zylindrischen Vertiefung 2 versehen ist. Am Umfang der zylindrischen Vertiefung 2 ist eine sich vertikal nach oben erstreckende Leitwand 3 vorgesehen, welche die Ausnehmung teilweise umschliesst, wie dies insbesondere aus der Fig. 2 ersichtlich ist.

An der beiden Längsseiten des Halters 1 ist unten je eine Seitenwand 4 angeordnet, die mit je einer klammerartigen Ausnehmung versehen sind. Die Klammern 5 dienen zur Befestigung des Gerätes am Tellerrand.

Im Gebrauch wird die mit dem Spaghettiknäuel beladene Gabel vertikal in die zylindrische Vertiefung 2 gesteckt und in Drehung versetzt. Durch die Leitwand 3 wird der Spaghettiknäuel geformt und auf die Gabel gewickelt, so dass ein mundgerechter Spaghettiwickel entsteht.

Gemäss einer Variante des Gerätes kann in der zylindrischen Vertiefung 2 eine entsprechende Hülse drehbar gelagert sein, welche zur Aufnahme der Gabelspitze dient und am Rand angeordnete Mitnehmerstifte besitzt. In diesem Fall wird die Gabel zusammen mit der frei drehbar gelagerten Hülse gedreht.

**Patentansprüche**

1. Hilfsgerät für Essgabel zum Aufwickeln von Spaghetti, dadurch gekennzeichnet, dass dasselbe einen an den Tellerrand zu befestigenden Halter (1) mit einer zylindrischen Vertiefung (2) zur Aufnahme der Gabelspitze und ein die Vertiefung teilweise umschliessendes, sich vertikal nach oben erstreckendes Leitorgan (3) aufweist und an beiden Längsseiten des Halters (1) je eine Seitenwand (4) mit je einer Klammer (5) besitzt.

2. Hilfsgerät nach Anspruch 1, dadurch gekennzeichnet, dass das Leitorgan (3) als Leitwand ausgebildet ist.

3. Hilfsgerät nach Ansprüchen 1 und 2, dadurch gekennzeichnet, dass in der zylindrischen Vertiefung (2) eine Hülse drehbar angeordnet und mit Mitnehmerstiften versehen ist.

**Claims**

1. A fork accessory for winding spaghetti on a fork characterised in that said fork accessory has clamping means (1) to secure it to a dish, and a circular recess (2) adapted to receive the points of a fork, said circular recess (3) being partially surrounded by a vertical, upwardly extending guiding-means (7), whereby on both longitudinal sides of the clamping means (1) there is provided a side wall (4) with a clamp (5).

2. A fork accessory according to claim 1, characterized in that the guiding-means (7) is in the form of a guiding-wall

3. A fork accessory according to claim 1 and 2, characterized in that the circular recess (3) receives a rotatable, cylindrical collar (5) which is fitted with driving-pins (8).

**Revendications**

1. Dispositif auxiliaire pour une fourchette en vue de l'enroulement de spaghettis, caractérisé en ce qu'il comporte un support (1) destiné à être fixé sur le bord d'une assiette, lequel est pourvu d'une partie en creux cylindrique (2) destinée à recevoir la pointe de la fourchette et d'un organe de guidage (3) s'étendant verticalement vers le haut et entourant partiellement la partie en creux, et sur chacun des deux côtés longitudinaux du support (1) un paroi latérale (4) pourvue d'une pince (5).

2. Dispositif auxiliaire suivant la revendication (1), caractérisé en ce que l'organe de guidage (3) est réalisé sous la forme d'une paroi de guidage.

3. Dispositif auxiliaire suivant les revendications 1 et 2, caractérisé en ce qu'un manchon est monté à rotation dans la partie en creux cylindrique (2), ce manchon étant pourvu de doigts d'accouplement.

FIG. 1

FIG. 2